# EUROPEAN PATENT SPECIFICATION

(11) **EP 4 098 408 B1**
(45) Date of publication and mention of the grant of the patent: **12.08.2026**
(21) Application number: 22174368.5
(22) Date of filing: 19.05.2022
(51) Int. Cl.: B25J 9/16, G05B 19/4103

(54) **PATH TEACHING DATA CREATION DEVICE, PATH TEACHING DATA CREATION METHOD, AND PROGRAM**
VORRICHTUNG, VERFAHREN UND PROGRAMM ZUR ERZEUGUNG VON PFADLEHRDATEN
DISPOSITIF DE CRÉATION DE DONNÉES D'APPRENTISSAGE DE CHEMIN, PROCÉDÉ DE CRÉATION DE DONNÉES D'APPRENTISSAGE DE CHEMIN, ET PROGRAMME

(30) Priority: 31.05.2021 JP 2021091032
(43) Date of publication of application: 07.12.2022
(73) Proprietor: JANOME Corporation, Hachioji-shi Tokyo 193-0941 (JP)
(72) Inventor: IWANO, Yosuke, Tokyo, 193-0941 (JP); SUGANUMA, Yoshikazu, Tokyo, 193-0941 (JP)
(74) Representative: Lippert Stachow Patentanwälte Rechtsanwälte

(56) References cited:
- GB-A- 2 473 129
- US-A- 4 794 540
- US-A1- 2013 204 426

## Description

### [Technical Field]

The present disclosure relates to a path teaching data creation device, a path teaching data creation method, and a path teaching data creation program.

### [Background Art]

A passage path of a robot tool is set based on teaching points (nodes) set by a user (for example, Patent Literature 1). For example, based on such a passage path, a user-desired process such as start or end of application is performed.

### [Citation List]

### [Patent Literature]

Document US 4,794,540 A discloses an iterative spline function controlled positioning mechanism such as a machine tool, wherein a movable element of the machine tool is driven about a plurality of axes under computer control along a path formed by a plurality of section and document US 2013/0204426 Al discloses a method including a bend angle calculation step of calculating a bend angle at each connecting point of a broken line which is obtained by successively connecting a predetermined plurality of machining points P1 to P3 by line segments, an approximation curve derivation step of deriving an approximation curve L5 closer to the connecting point the larger the bend angle calculated by the bend angle calculation step, and a tool path generation step of generating a tool path PA7 along the approximation curve L5 derived by the approximation curve derivation step.

[PTL 1]
Japanese Patent Application Laid-Open No. H1-217608

### [Summary of Invention]

### [Technical Problem]

Since teaching points are arranged at intervals, interpolation points are inserted between teaching points by spline interpolation, and a tool path is indicated by the interpolation points. The tool is driven along a spline curve connecting respective interpolation points in order, and various processes (for example, application) can be performed by the tool at positions of the interpolation points.

When spline interpolation is performed on teaching points, however, the position of a generated interpolation point may be shifted from the position of the teaching point. In such a case, a teaching point will not be included on the spline path connecting respective interpolation points, and a process such as application by a robot may not be performed at a position of a teaching point set by the user.

The present disclosure has been made in view of such circumstances and intends to provide a path teaching data creation device, a path teaching data creation method, and a path teaching data creation program that can create path teaching data for a robot to reliably pass through a teaching point.

### [Solution to Problem]

The first aspect of the present disclosure is a control device according to claim 1.

The second aspect of the present disclosure is a path teaching data creation method according to claim 5.

The third aspect of the present disclosure is a path teaching data creation program according to claim 6.

### [Advantageous Effects of Invention]

The present disclosure achieves an advantageous effect that it is possible to create path teaching data for a robot to reliably pass through a teaching point.

### [Brief Description of Drawings]

[Fig. 1]

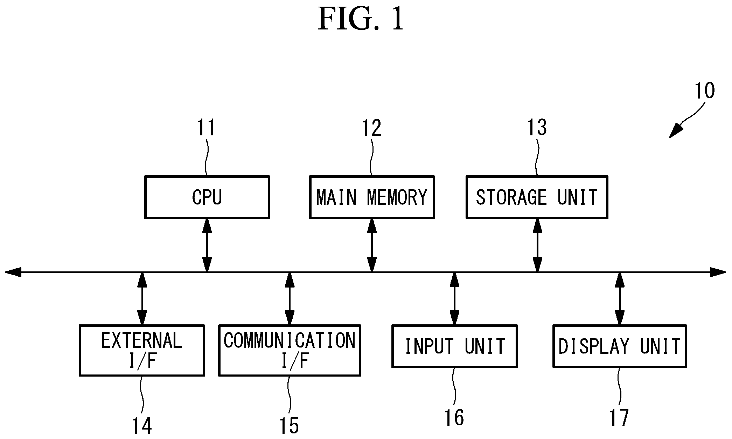

   Fig. 1 is a diagram illustrating an example of a hardware configuration of a control device according to one embodiment of the present disclosure.
[Fig. 2]

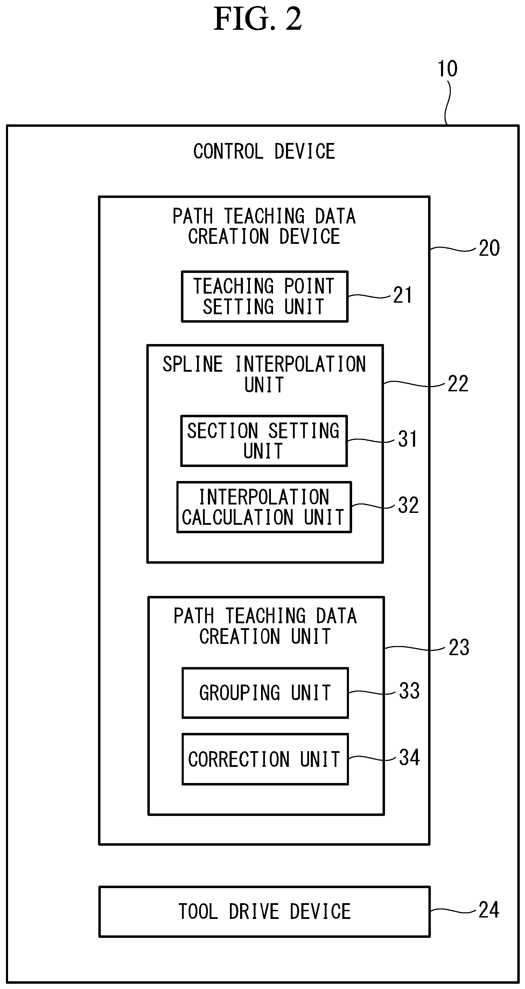

   Fig. 2 is a function block diagram illustrating functions of the control device according to one embodiment of the present disclosure.
[Fig. 3]

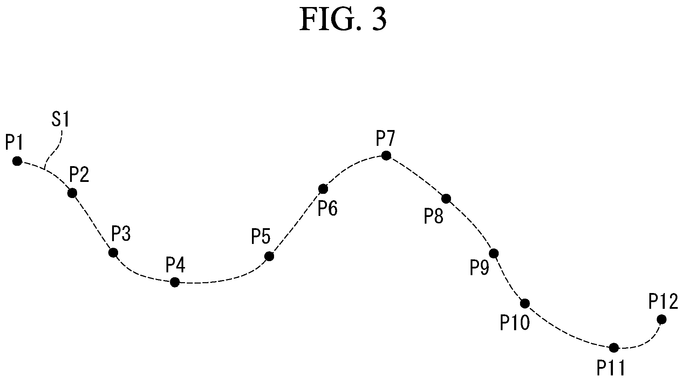

   Fig. 3 is a diagram illustrating an example of setting of teaching points according to one embodiment of the present disclosure.
[Fig. 4]

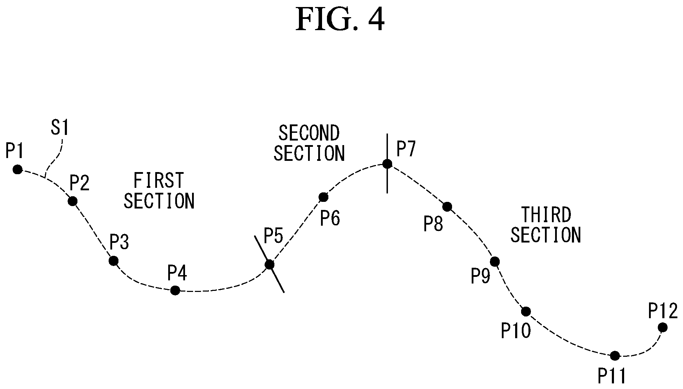

   Fig. 4 is a diagram illustrating an example of setting of sections according to one embodiment of the present disclosure.
[Fig. 5]

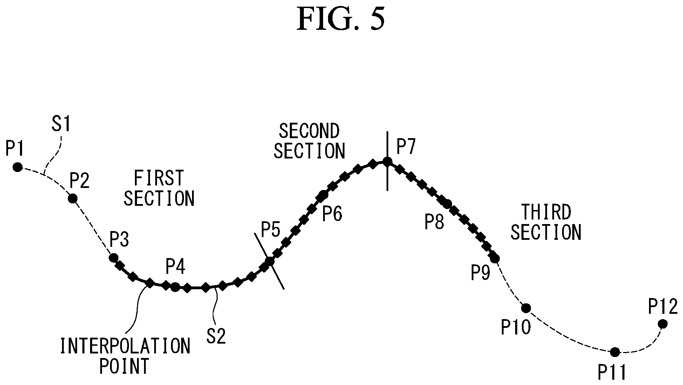

   Fig. 5 is a diagram illustrating an example of generation of interpolation points in a target section according to one embodiment of the present disclosure.
[Fig. 6]

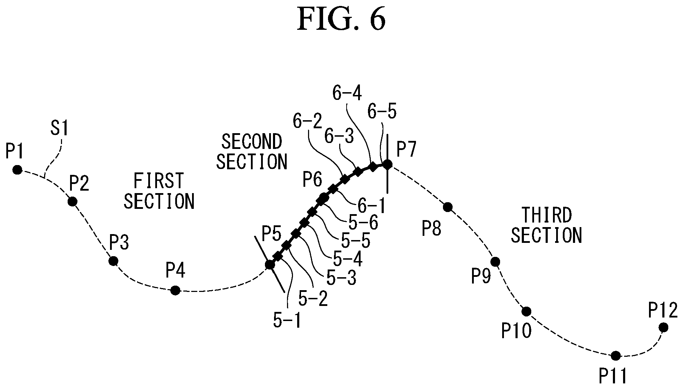

   Fig. 6 is a diagram illustrating an example of a grouping operation according to one embodiment of the present disclosure.
[Fig. 7]

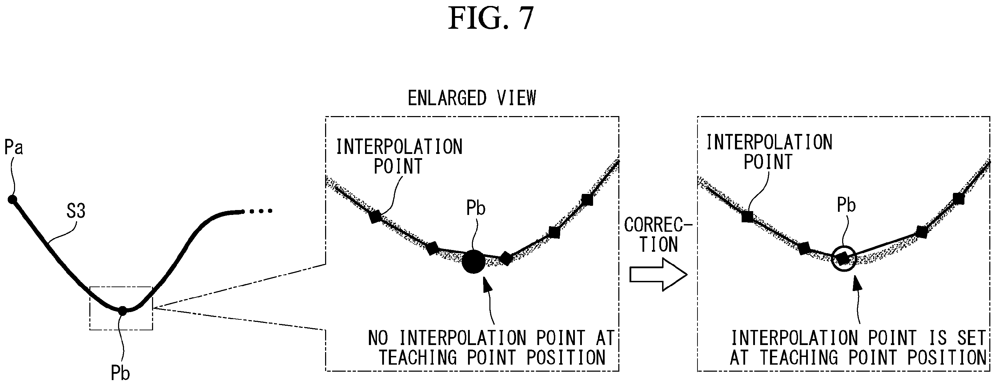

   Fig. 7 is a diagram illustrating an example of a correction operation on an interpolation point according to one embodiment of the present disclosure.
[Fig. 8]

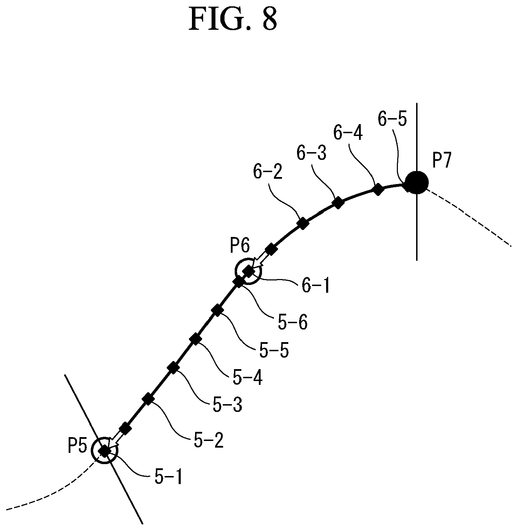

   Fig. 8 is a diagram illustrating a specific example of a correction operation according to one embodiment of the present disclosure.
[Fig. 9]

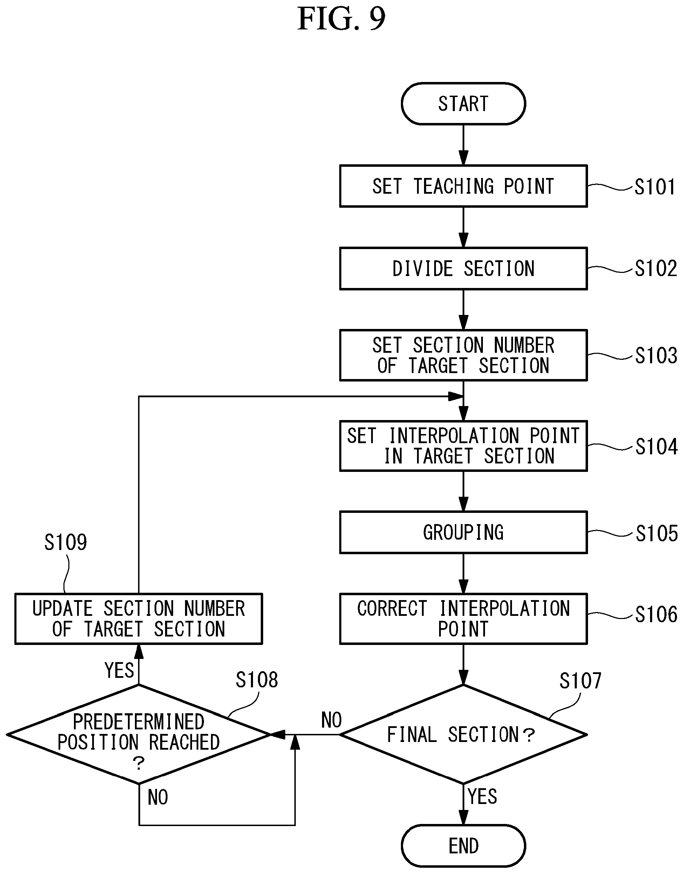

   Fig. 9 is a flowchart illustrating an example of a procedure of a path teaching data creation process according to one embodiment of the present disclosure.

### [Description of Embodiments]

One embodiment of a path teaching data creation device, a path teaching data creation method, and a path teaching data creation program according to the present disclosure will be described below with reference to the drawings.

A path teaching data creation device 20 according to one embodiment of the present disclosure (see Fig. 2) is provided in a control device 10 that controls a robot configured to perform a process on an object to be machined, for example. Further, the path teaching data creation device 20 creates path teaching data indicating a moving path of a tool of the robot. That is, based on path teaching data created by the path teaching data creation device 20, a tool of the robot moves with respect to an object to be machined and performs a predetermined process thereon. Although a case where the robot performs application (start and end of application) on an object to be machined will be described as an example in the present embodiment, a process to be performed is not limited to application.

Fig. 1 is a schematic configuration diagram illustrating an example of a hardware configuration of the control device 10 according to one embodiment of the present invention. As illustrated in Fig. 1, the control device 10 is a so-called computer and includes a central processing unit (CPU) 11, a main memory 12, a storage unit 13, an external interface 14, a communication interface 15, an input unit 16, a display unit 17, and the like, for example. These units are connected to each other directly or indirectly via a bus and perform various processes in cooperation with each other.

The CPU 11 performs overall control of the control device 10 by using operating system (OS) stored in the storage unit 13 connected thereto via a bus, for example, and performs various processes by executing various programs stored in the storage unit 13.

The main memory 12 is formed of a writable memory such as a cash memory, a random access memory (RAM), or the like, for example, and used as a working area where an execution program of the CPU 11 is loaded, data processed by the execution program is written, or the like.

The storage unit 13 is a non-transitory storage medium (non-transitory computer readable storage medium) and may be, for example, a read only memory (ROM), a hard disk drive (HDD), a flash memory, or the like. For example, the storage unit 13 stores OS used for performing overall control of the device, such as Windows (registered trademark), iOS (registered trademark), Android (registered trademark), or the like, basic input/output system (BIOS), various device driver used for operating hardware of peripherals, various application software, various data or files, and the like. Further, the storage unit 13 stores a program used for implementing various processes or various data required for implementing various processes.

The external interface 14 is an interface used for a connection to an external device. An example of the external device may be an external monitor, a USB memory, an external HDD, or the like. Note that, although only a single external interface is depicted in the example illustrated in Fig. 1, a plurality of external interfaces may be provided.

The communication interface 15 functions as an interface that connects itself to a network to communicate with another device and transmits and receives information.

For example, the communication interface 15 communicates with another device via a wired or wireless connection, for example. The wireless communication may be communication using Bluetooth (registered trademark), Wi-Fi, a dedicated communication protocol, or the like. An example of wired communication may be a wired local area network (LAN) or the like.

The input unit 16 is a user interface used by the user to provide an instruction to the path teaching data creation device 20, such as a keyboard, a mouse, a touch pad, or the like, for example.

The display unit 17 is a liquid crystal display, an organic electroluminescence (EL) display, or the like, for example. Further, the display unit 17 may be a touch panel display on which a touch panel is layered.

Fig. 2 is a function block diagram illustrating functions of the control device 10. As illustrated in Fig. 2, the control device 10 includes the path teaching data creation device 20 and a tool drive device 24. Although the control device 10 is configured to include the path teaching data creation device 20 in the present embodiment, the path teaching data creation device 20 may be provided separately from the control device 10. Path teaching data created by the path teaching data creation device 20 may be provided to the control device 10, and thereby the robot may be driven.

The function implemented by each of the above components is implemented by processing circuitry, for example. For example, a series of processes for implementing the function described below is stored in the storage unit 13 in a form of a program (for example, a path teaching data creation program) as an example, and various functions are implemented when the CPU 11 loads the program into the main memory 12 and performs modification or calculation processing on information.

Note that a form in which a program is installed in advance in the storage unit 13, a form in which a program is provided in a state of being stored in another computer readable storage medium, a form in which a program is delivered via a wired or wireless communication scheme, or the like may be applied to the program. The computer readable storage medium may be a magnetic disk, a magneto-optical disk, a CD-ROM, a DVD-ROM, a semiconductor memory, or the like.

The path teaching data creation device 20 includes a teaching point setting unit 21, a spline interpolation unit 22, and a path teaching data creation unit 23.

The teaching point setting unit 21 sets teaching points (nodes). A teaching point is a position through which a tool of the robot is intended to pass, and the teaching point is set by the user. Further, a teaching point is set also as a position at which a predetermined process is intended to be performed on an object to be machined. In such a way, a teaching point is a designated point set by an instruction provided by the user. Note that a teaching point may be automatically set by a calculation process without being limited to a case of being set by the user.

For example, a teaching point is set for three-dimensional shape data (three-dimensional CAD data) of an object to be machined. Fig. 3 is a diagram illustrating an example of setting of teaching points. As illustrated in Fig. 3, for example, teaching points P1 to P12 are set. Each teaching point includes a number element, and a start point and an end point can be designated. In the example of Fig. 3, the teaching point of P1 is the start point, and the teaching point of P12 is the end point. A string of teaching points is set in such a way. In Fig. 3, the spline curve for the teaching points P1 to P12 is virtually illustrated as S1 for the purpose of illustration. The spline curve of S1 may be calculated by the path teaching data creation device 20 or may be calculated by a post-stage device that has received path teaching data from the path teaching data creation device 20.

The spline interpolation unit 22 performs spline interpolation based on given multiple teaching points and generates a plurality of interpolation points between adjacent teaching points. In the present embodiment, the spline interpolation unit 22 performs spline interpolation based on a plurality of teaching points set by the teaching point setting unit 21. When the number of set teaching points is large and if spline interpolation is collectively calculated for all the teaching points, this will result in a large processing load. Thus, the spline interpolation unit 22 divides a plurality of teaching points into a plurality of sections and generates interpolation points on a section basis.

Thus, the spline interpolation unit 22 includes a section setting unit 31 and an interpolation calculation unit 32.

The section setting unit 31 divides a string of teaching points set by the teaching point setting unit 21 into a plurality of sections. For example, each section is set so as to include a plurality of teaching points. For example, a section may be set for every predetermined number of teaching points. Fig. 4 illustrates an example in which sections are set and divided for the teaching points set as with Fig. 3. In the example of Fig. 4, a section from P1 to P5 is defined as a first section, a section from P5 to P7 is defined as a second section, and a section from P7 to P12 is defined as a third section. The scheme for setting sections is not limited to that of Fig. 4.

The interpolation calculation unit 32 performs spline interpolation calculation on a section basis. Specifically, the interpolation calculation unit 32 defines one of the plurality of sections set by the section setting unit 31 as a target section and performs spline interpolation on this target section. In the spline interpolation, an interpolation point is generated between teaching points to interpolate a part between the teaching points. For example, when spline interpolation is performed on five teaching points, interpolation points are generated on a spline curve passing through all these five teaching points (a polynomial approximation curve passing through a plurality of teaching points). Note that various techniques have already been proposed for spline interpolation itself. Thus, a known technique can be employed as appropriate. That is, a process is performed in accordance with a known algorithm, and thereby interpolation points are generated between teaching points.

In such an operation, when known spline interpolation is performed based only on teaching points included in a target section, smooth connection may not be performed near the boundary between sections. Thus, the interpolation calculation unit 32 defines one of the plurality of sections as a target section and generates a plurality of interpolation points in the target section based on (i) a teaching point included in the target section, on (ii) a plurality of teaching points that are included in a section preceding to the target section and are continuous to the teaching point in the target section, and on (iii) a plurality of teaching points that are included in a section subsequent to the target section and are continuous to the teaching point in the target section.

Fig. 5 illustrates an example of a case where the second section of Fig. 4 is defined as a target section and an interpolation point in the second section is calculated. As illustrated in Fig. 5, when an interpolation point in the second section is calculated, the interpolation point is calculated based on teaching points (P5, P6, P7) included in the second section, teaching points (P3, P4) preceding to the second section (on the start point side), and teaching points (P8, P9) subsequent to the second section (on the end point side). The teaching points (P3, P4) preceding to the second section (on the start point side) are a plurality of teaching points that are included in the section preceding to the second section (first section) and are continuous to the teaching points (P5, P6, P7) in the second section. The teaching points (P8, P9) subsequent to the second section (on the end point side) are a plurality of teaching points that are included in the section subsequent to the second section (third section) and are continuous to the teaching points (P5, P6, P7) in the second section. Thus, interpolation points associated with a spline curve passing through respective teaching points of teaching points P3 to P9 are generated. Accordingly, when a spline curve is generated based on these interpolation points, the spline curve near the teaching point P5 and the teaching point P7 in the second section can be generated as a smooth spline curve. In Fig. 5, the spline curve passing through the teaching points from P3 to P9 is virtually indicated as S2.

In such a way, once the interpolation points from the teaching points P3 to P9 are calculated, only the portion of the second section that is a target section is trimmed, and interpolation points in the second section are determined. Although S1 and S2 substantially match in the second section in the example of Fig. 5, S2 may be shifted from S1 on the end side of S2 (on P3 side or on P9 side). Thus, by generating interpolation points from P3 to P9 and trimming only the portion of the second section (cutting the end side), it is possible to set the same interpolation points as those when all the teaching points (P1 to P12) are taken into consideration. For other sections, similarly, spline interpolation calculation is performed to cut an unnecessary portion by using not only teaching points included in a section but also a plurality of teaching points preceding and subsequent to the section, respectively.

Note that, when the initial point in a section is the start point (P1) of the teaching points, there is no teaching point preceding to this section. Thus, when an interpolation point of such a section is calculated, no teaching point preceding to the section is used. Similarly, when the final point in a section is the end point (P12) of the teaching points, there is no teaching point subsequent to this section. Thus, when an interpolation point of such a section is calculated, no teaching point subsequent to the section is used.

In calculation of an interpolation point in a target section, the calculation is performed by using not only the teaching point included in the target section but also a plurality of teaching points that are included in a section preceding to the target section and are continuous to the teaching point in the target section and a plurality of teaching points that are included in a section subsequent to the target section and are continuous to the teaching point in the target section, and only the interpolation point in the target section is used. Thus, the continuity with interpolation points between adjacent sections can be improved.

The path teaching data creation unit 23 creates path teaching data indicating a position through which a tool of the robot passes so that the tool passes through the positions of respective teaching points based on position information on a plurality of interpolation points generated by the spline interpolation unit 22 and position information on a plurality of teaching points. Specifically, the path teaching data creation unit 23 identifies one of the interpolation points corresponding to one of the teaching points based on the position information on the plurality of teaching points and position information on the plurality of interpolation points generated by the spline interpolation unit 22. Further, position information on the identified interpolation point is changed to position information on the corresponding teaching point. Thus, the path teaching data creation unit 23 includes a grouping unit 33 and a correction unit 34.

The grouping unit 33 sets a plurality of interpolation points interposed between adjacent teaching points and one of the adjacent teaching points as one group. Specifically, interpolation points located from a position of one teaching point before the position of the next teaching point are grouped as interpolation points belonging to the one teaching point. For example, interpolation points from the position of the teaching point of P5 (including the position of the teaching point of P5) before the position of the teaching point of P6 are grouped as interpolation points belonging to the teaching point of P5. For example, grouping is performed by adding information on a belonging teaching point (for example, a teaching point number) to an interpolation point. Fig. 6 illustrates an example in which interpolation points located from the position of the teaching point of P5 before the position of the teaching point of P6 are grouped. Information on 5-1 to 5-6 is added to respective interpolation points. For example, the information 5-3 means that the interpolation point of interest is the third interpolation point of the interpolation points belonging to P5. Information on 6-1 to 6-5 is added to interpolation points from the position of the teaching point of P6 before the position of the teaching point of P7 in the same manner.

The correction unit 34 corrects position information on an interpolation point generated by the spline interpolation unit 22. Fig. 7 is a diagram illustrating an example of the arrangement of teaching points and interpolation points. In Fig. 7, a spline curve passing through the teaching points Pa and Pb is illustrated as S3. As illustrated in Fig. 7, interpolation points are generated by spline interpolation calculation by the spline interpolation unit 22. Herein, as seen in the enlarged view around the teaching point of Pb, although interpolation points are set between teaching points, no interpolation point is set at a position matching the position of the teaching point. Thus, the correction unit 34 replaces the position information on the interpolation point with the position information on the teaching point. That is, the correction unit 34 performs a process so that the interpolation point is set at the position of the teaching point. Accordingly, an interpolation point having the position information on the teaching point Pb is generated.

For example, the correction unit 34 checks a string of interpolation points generated by the spline interpolation unit 22 sequentially from the start point and, when the group is switched, identifies the first interpolation point of the group. The first interpolation point of a group is the closest interpolation point to a belonging teaching point in the group. Thus, the correction unit 34 identifies the first interpolation point of a group as a point to be corrected and replaces the position information on this interpolation point with the position information on the belonging teaching point.

Fig. 8 illustrates an example in which correction has been performed on the result in Fig. 7. In the group of interpolation points (6-1 to 6-5) belonging to the teaching point P6, the interpolation point of 6-1 is the closest interpolation point to the teaching point P6. Thus, the interpolation point of 6-1 is replaced with the position of the teaching point P6 (the position information on the interpolation point is rewritten to the position information on the teaching point), and thereby an interpolation point is set at the position of the teaching point P6.

Although the closest interpolation point to a setting position of a teaching point in a switched group is moved to a teaching point position in the above example, the closest interpolation point to a setting position of a teaching point in a group before switched may be moved to the teaching point position.

Although the closest interpolation point to a setting position of a teaching point in a group is identified in the above example, the embodiment is not limited to the above method as long as an interpolation point close to a teaching point can be identified. That is, the setting unit may identify an interpolation point adjacent to a setting position of a teaching point out of interpolation points on a spline curve and replace the identified interpolation point with the setting position of the teaching point. The method of identifying an interpolation point to be corrected is not limited.

Further, although an interpolation point is replaced with a teaching point position in the above example, an interpolation point (not generated by the spline interpolation unit 22) may be newly set at the teaching point position.

In such a way, an interpolation point generated by the spline interpolation unit 22 is corrected by the correction unit 34. Thus, an interpolation point having position information on a position at which a teaching point is set is more reliably set.

After interpolation points are set in such a way, the string of the interpolation points corresponds to path teaching data. That is, interpolation points interpolated between teaching points and interpolation points having position information on teaching points corrected by the correction unit 34 are included in path teaching data, and the position information on each interpolation point can be referenced.

The tool drive device 24 drives a tool of a robot based on path teaching data. In path teaching data, positions through which the tool of the robot passes are indicated as the positions of interpolation points, and the tool of the robot moves sequentially from one interpolation point to another along a string of interpolation points. The tool moves in the order of the string of interpolation points also at a transition position between sections. Further, since position information on interpolation points is included in path teaching data, it is also possible to cause the robot to perform a predetermined process such as application at a position of an interpolation point. In particular, since interpolation points having position information on each teaching point is included in path teaching data, it is possible to perform a user-desired process at a position intended by the user (a position of a teaching point).

Next, an example of the path teaching data creation process performed by the path teaching data creation device 20 described above will be described with reference to Fig. 9. Fig. 9 is a flowchart illustrating an example of a procedure of the path teaching data creation process according to the present embodiment. The flow illustrated in Fig. 9 describes a case as an example where path teaching data is generated for a certain section and, when a tool has moved to a predetermined position set in the middle of the certain section, path teaching data for the next section is generated.

First, a plurality of teaching points are set (S101). The plurality of set teaching points are then divided into a plurality of sections (S 102). Note that, in each section, section numbers (for example, first section = 1, second section = 2, third section = 3) have been set.

Next, a section number of a target section for spline interpolation to be performed is set (S103). In S103, the section number is set as the initial section (for example, 1). Note that, as the target section, a single section may be set or a plurality of sections may be set.

Spline interpolation is performed on the target section to set interpolation points (S104).

Next, the interpolation points are grouped (S105). Accordingly, interpolation points and a teaching point to which the interpolation points belong are associated with each other.

Next, an interpolation point to be corrected is identified, and position information on this interpolation point is converted into position information on the belonging teaching point (S106). Since interpolation points are set for a target section by the process from S104 to S106, the robot can move a tool in accordance with the set interpolation points.

Next, it is determined whether or not the target section is the final section (that is, N) (S107). If the target section is the final section (S107, YES), the process ends.

If the target section is not the final section (S107, NO), it is determined whether or not the tool has reached a predetermined position (S108). The predetermined position is set in advance as a position within a section (for example a midpoint). If the tool has not yet reached the predetermined position (S108, NO), the operation of S108 is repeatedly performed.

If the tool has reached the predetermined position (S108, YES), a number for a section on which the process is performed next is set (S109), and the process returns to S104.

After the above process is performed, interpolation points in sections are generated sequentially in accordance with the position where the tool has been moved. For example, interpolation points are set in the first section, and when the tool has reached a predetermined position (for example, the midpoint) within the first section while the tool is moving in the first section, interpolation points in the second section are generated. The tool moves sequentially along the string of interpolation points from the first section to the second section, and when the tool has reached a predetermined position (for example, the midpoint) within the second section, interpolation points in the third section are generated. That is, it is no longer necessary to generate interpolation points for all the teaching points before the tool starts moving, and it is possible to save the memory capacity.

As described above, according to the path teaching data creation device, the path teaching data creation method, and the path teaching data creation program of the present embodiment, path teaching data indicating positions through which a tool of the robot passes is created based on position information on interpolation points generated by the spline interpolation unit 22 and position information on teaching points so that the tool passes through the positions of respective teaching points. Accordingly, a user-desired process can be performed at a position intended by the user (a position of a teaching point). It is therefore possible to improve usability for the user.

One interpolation point corresponding to one teaching point is identified, the position information on the identified interpolation point is changed to the position information on the corresponding teaching point, and thereby the position information on the generated interpolation point can be corrected to generate an interpolation point having position information on the teaching point.

Out of a plurality of interpolation points generated by the spline interpolation unit 22, one interpolation point adjacent to the position of one teaching point is identified as the interpolation point corresponding to the teaching point, and thereby an interpolation point close to the teaching point can be corrected to have the position information on the teaching point.

A plurality of interpolation points interposed between adj acent teaching points and one of the adjacent teaching points are set as one group. The closest interpolation point to the teaching point in the group is then identified as an interpolation point corresponding to the teaching point, and thereby the interpolation point close to the teaching point can be corrected to have the position information on the teaching point.

A plurality of teaching points are divided into a plurality of sections, a plurality of interpolation points are generated on a section basis, and thereby a processing load can be reduced compared to a case where spline interpolation is collectively calculated for all the teaching points. Further, saving of the memory capacity is expected.

One of the plurality of sections is defined as a target section, and a plurality of interpolation points in a target section are generated based on a teaching point included in the target section, on a plurality of teaching points that are included in a section preceding to the target section and are continuous to the teaching point in the target section, and on a plurality of teaching points that are included in a section subsequent to the target section and are continuous to the teaching point in the target section. Accordingly, the continuity with interpolation points between adjacent sections can be improved. Further, since a complex calculation process (for example, end point conditions) required for improving the continuity can be suppressed, the processing load can be reduced.

The present disclosure is not limited to only the embodiment described above.

### [Reference Signs List]

- 10: control device
- 11: CPU
- 12: main memory
- 13: storage unit
- 14: external interface
- 15: communication interface
- 16: input unit
- 17: display unit
- 20: path teaching data creation device
- 21: teaching point setting unit
- 22: spline interpolation unit
- 23: path teaching data creation unit
- 24: tool drive device
- 31: section setting unit
- 32: interpolation calculation unit
- 33: grouping unit
- 34: correction unit
- P1 to P12: teaching point

## Claims

1. A control device (10) with a tool drive device (24) and a path teaching data creation device (20), the path teaching data creation device (20) comprising:
a spline interpolation unit (22) configured to perform spline interpolation based on given multiple teaching points and generate a plurality of interpolation points between adjacent teaching points of the multiple teaching points;
a path teaching data creation unit (23) configured to create path teaching data indicating a position through which a tool of a robot passes based on position information on the plurality of interpolation points generated by the spline interpolation unit and position information on the multiple teaching points so that the tool passes through each position of the multiple teaching points,
**characterised in that** the path teaching data creation unit (23) is configured for each teaching point:
to identify one interpolation point of the interpolation points closest to one teaching point of the multiple teaching points based on the position information on the multiple teaching points and the position information on the plurality of interpolation points generated by the spline interpolation unit and to change position information on the identified interpolation point to position information on the closest teaching point and wherein the string of the interpolation points corresponds to the path teaching data,
the tool drive device (24) is configured to drive the tool of the robot based on the path teaching data.

2. The control device (10) according to claim 1, wherein the path teaching data creation unit (23) is configured to set, as one group, the plurality of interpolation points interposed between the adjacent teaching points and one teaching point of the adjacent teaching points and to identify the closest interpolation point to the one teaching point in the group as the interpolation point corresponding to the teaching point.

3. The control device (10) according to any one of claims 1 to 2, wherein the spline interpolation unit (22) is configured to divide the multiple teaching points into a plurality of sections and to generate the plurality of interpolation points for each of the sections.

4. The control device (10) according to claim 3, wherein the spline interpolation unit (22) is configured to define one of the plurality of sections as a target section and to generate the plurality of interpolation points in the target section based on the teaching point included in the target section, on a plurality of teaching points which are included in the section preceding to the target section and are continuous to the teaching point in the target section, and on a plurality of teaching points which are included in the section subsequent to the target section and are continuous to the teaching point in the target section.

5. A path teaching data creation method comprising, at a computer:
performing spline interpolation based on given multiple teaching points and generating a plurality of interpolation points between adjacent teaching points of the multiple teaching points; and
creating path teaching data indicating a position through which a tool of a robot passes based on position information on the plurality of interpolation points generated by the spline interpolation and position information on the multiple teaching points so that the tool passes through each position of the multiple teaching points, **characterized in that** creating path teaching data comprises for each teaching point:
identifying one interpolation point of the interpolation points closest to one teaching point of the multiple teaching points based on the position information on the multiple teaching points and the position information on the plurality of interpolation points generated by the spline interpolation unit and
changing position information on the identified interpolation point to position information on the closest teaching point, and wherein the string of the interpolation points corresponds to the path teaching data, driving the tool of the robot based on path teaching data.

6. A path teaching data creation program configured to cause a computer to function as the path teaching data creation device according to any one of claims 1 to 4.

## Patentansprüche

1. Steuervorrichtung (10) mit einer Werkzeugantriebseinrichtung (24) und einer Pfadlehrdaten-Erzeugungseinrichtung (20), wobei die Pfadlehrdaten-Erzeugungseinrichtung (20) umfasst:
eine Spline-Interpolationseinheit (22), die konfiguriert ist für die Durchführung einer Spline-Interpolation auf der Grundlage von gegebenen mehreren Lehrpunkten und für die Erzeugung einer Mehrzahl von Interpolationspunkten zwischen benachbarten Lehrpunkten der mehreren Lehrpunkte;
eine Pfadlehrdaten-Erstellungseinheit (23), die konfiguriert ist für die Erstellung von Pfadlehrdaten, die eine Position angeben, die von einem Werkzeug eines Roboters durchlaufen wird, auf der Grundlage von
Positionsinformationen zu der Mehrzahl von Interpolationspunkten, die durch die Spline-Interpolationseinheit erzeugt werden, und von Positionsinformationen zu den mehreren Lehrpunkten, derart, dass das Werkzeug jede Position der mehreren Lehrpunkte durchläuft,
**dadurch gekennzeichnet, dass** die Pfadlehrdaten-Erstellungseinheit (23) dazu eingerichtet ist, für jeden Lehrpunkt:
einen Interpolationspunkt der Interpolationspunkte anzugeben, der einem Lehrpunkt der mehreren Lehrpunkte am nächsten liegt, auf der Grundlage der Positionsinformationen zu den mehreren Lehrpunkten und der Positionsinformationen zu der Mehrzahl von Interpolationspunkten, die durch die Spline-Interpolationseinheit erzeugt werden, und die Positionsinformationen zu dem angegebenen Interpolationspunkt in Positionsinformation zu dem nächstliegenden Lehrpunkt zu ändern, wobei die Reihe von Interpolationspunkten den Pfadlehrdaten entspricht,
wobei die Werkzeugantriebseinrichtung (24) dazu eingerichtet ist, das Werkzeug des Roboters auf der Grundlage der Pfadlehrdaten anzusteuern.

2. Steuervorrichtung (10) nach Anspruch 1, wobei die Pfadlehrdaten-Erstellungseinheit (23) dazu eingerichtet ist, die Mehrzahl von Interpolationspunkten, die zwischen den benachbarten Lehrpunkten und einem Lehrpunkt der benachbarten Lehrpunkte liegen, als eine Gruppe festzulegen und den Interpolationspunkt, der dem einen Lehrpunkt in der Gruppe am nächsten liegt, als den dem Lehrpunkt entsprechenden Interpolationspunkt anzugeben.

3. Steuervorrichtung (10) nach einem der Ansprüche 1 bis 2, wobei die Spline-Interpolationseinheit (22) dazu eingerichtet ist, die mehreren Lehrpunkte in eine Mehrzahl von Abschnitten zu unterteilen und die Mehrzahl von Interpolationspunkten für jeden der Abschnitte zu erzeugen.

4. Steuervorrichtung (10) nach Anspruch 3, wobei die Spline-Interpolationseinheit (22) dazu eingerichtet ist, einen der Mehrzahl von Abschnitten als eine Zielabschnitt zu definieren und die Mehrzahl von Interpolationspunkten in dem Zielabschnitt auf der Grundlage des in dem Zielabschnitt enthaltenen Lehrpunkts, einer Mehrzahl von Lehrpunkten, die in dem dem Zielabschnitt vorangehenden Zielabschnitt enthalten sind und sich nahtlos an den Lehrpunkt in dem Zielabschnitt anschließen, und einer Mehrzahl von Lehrpunkten, die in dem dem Zielabschnitt nachfolgenden Abschnitt enthalten sind und sich nahtlos an den Lehrpunkt in dem Zielabschnitt anschließen, zu erzeugen.

5. Pfadlehrdaten-Erstellungsverfahren umfassend, an einem Computer:
Durchführen einer Spline-Interpolation an gegebenen mehreren Lehrpunkten und Erzeugen einer Mehrzahl von Interpolationspunkten zwischen benachbarten Lehrpunkten der mehreren Lehrpunkte; und
Erstellen von Pfadlehrdaten, die eine Position angeben, die von einem Werkzeug eines Roboters durchlaufen wird, auf der Grundlage von Positionsinformationen zu der Mehrzahl von Interpolationspunkten, die durch die Spline-Interpolation erzeugt werden, und von Positionsinformationen zu den mehreren Lehrpunkten, so dass das Werkzeug jede Position der mehreren Lehrpunkte durchläuft, **dadurch gekennzeichnet, dass** die Erstellung von Pfadlehrdaten für jeden Lehrpunkt umfasst:
Angeben eines Interpolationspunkts der Interpolationspunkte, der einem Lehrpunkt der mehreren Lehrpunkte am nächsten liegt, auf der Grundlage von Positionsinformationen zu den mehreren Lehrpunkten und Positionsinformationen zu der Mehrzahl von Interpolationspunkten, die durch die Spline-Interpolationseinheit erzeugt werden, und
Ändern der Positionsinformationen zu den angegebenen Interpolationspunkten in Positionsinformationen zu dem nächstliegenden Lehrpunkt, wobei die Reihe von Interpolationspunkten den Pfadlehrdaten entspricht,
wobei das Werkzeug des Roboters auf der Grundlage von Pfadlehrdaten angesteuert wird.

6. Pfadlehrdaten-Erstellungsprogramm, das dazu konfiguriert ist zu veranlassen, dass ein Computer als Pfadlehrdaten-Erzeugungseinrichtung gemäß einem der Ansprüche 1 bis 4 dient.

## Revendications

1. Dispositif de commande (10) comprenant un dispositif d'entraînement d'outil (24) et un dispositif de génération de données d'apprentissage de chemin (20), le dispositif de génération de données d'apprentissage de chemin (20) comprenant:
une unité d'interpolation spline (22) configurée pour effectuer une interpolation spline sur la base d'une pluralité donnée de points d'apprentissage et pour générer une pluralité de points d'interpolation entre des points d'apprentissage adjacents de ladite pluralité de points d'apprentissage;
une unité de création de données d'apprentissage (23) de chemin, configurée pour créer des données d'apprentissage de chemin indiquant une position parcourue par un outil d'un robot, sur la base d'informations de position relatives à la pluralité de points d'interpolation générés par l'unité d'interpolation spline, et des informations de position relatives à la pluralité de points d'apprentissage, de telle sorte que l'outil passe par chaque position de la pluralité de points d'apprentissage,
**caractérisé en ce que** l'unité de création de données d'apprentissage de chemin (23) est agencée pour, pour chaque point d'apprentissage:
spécifier un point d'interpolation parmi les points d'interpolation qui est le plus proche d'un point d'apprentissage parmi la pluralité de points d'apprentissage, sur la base des informations de position relatives à la pluralité de points d'apprentissage et des informations de position relatives à la pluralité de points d'interpolation générés par l'unité d'interpolation spline, et de convertir les informations de position relatives au point d'interpolation spécifié en informations de position relatives au point d'apprentissage le plus proche, la série de points d'interpolation correspondant aux données d'apprentissage de chemin,
le dispositif d'entraînement d'outil (24) étant agencé pour commander l'outil du robot sur la base des données d'apprentissage de chemin.

2. Dispositif de commande (10) selon la revendication 1, dans lequel l'unité de création de données d'apprentissage de chemin (23) est agencée pour définir comme un groupe la pluralité de points d'interpolation situés entre les points d'apprentissage adjacents et l'un des points d'apprentissage parmi les points d'apprentissage adjacents, et pour identifier le point d'interpolation le plus proche de ce point d'apprentissage dans le groupe comme étant le point d'interpolation correspondant au point d'apprentissage.

3. Dispositif de commande (10) selon l'une quelconque des revendications 1 à 2, dans lequel l'unité d'interpolation spline (22) est agencée pour diviser la pluralité de points d'apprentissage en une pluralité de sections et pour générer la pluralité de points d'interpolation pour chacun des sections.

4. Dispositif de commande (10) selon la revendication 3, dans lequel l'unité d'interpolation spline (22) est agencée pour définir l'une des sections de la pluralité de sections comme section cible et pour générer la pluralité de points d'interpolation dans la section cible sur la base du point d'apprentissage contenu dans la section cible, d'une pluralité de points d'apprentissage contenus dans la section précédant la section cible et se raccordant de manière continue au point d'apprentissage dans la section cible, et d'une pluralité de points d'apprentissage contenus dans la section suivant la section cible et se raccordant de manière continue au point d'apprentissage dans la section cible.

5. Procédé de création de données d'apprentissage de chemin, comprenant, sur un ordinateur:
la réalisation d'une interpolation spline sur une pluralité de points d'apprentissage donnés et la génération d'une pluralité de points d'interpolation entre des points d'apprentissage adjacents de ladite pluralité de points d'apprentissage; et
la création de données d'apprentissage de chemin indiquant une position parcourue par un outil d'un robot, sur la base d'informations de position relatives à la pluralité de points d'interpolation générés par l'interpolation spline et d'informations de position relatives à la pluralité de points d'apprentissage, de sorte que l'outil parcoure chaque position de la pluralité de points d'apprentissage,
**caractérisé en ce que** la création de données d'apprentissage de chemin pour chaque point d'apprentissage comprend:
l'identification d'un point d'interpolation parmi les points d'interpolation qui est le plus proche d'un point d'apprentissage parmi la pluralité de points d'apprentissage, sur la base d'informations de position relatives à la pluralité de points d'apprentissage et d'informations de position relatives à la pluralité de points d'interpolation générés par l'unité d'interpolation spline, et
la conversion des informations de position relatives aux points d'interpolation spécifiés en informations de position relatives au point d'apprentissage le plus proche, la série de points d'interpolation correspondant aux données d'apprentissage de chemin,
l'outil du robot étant commandé sur la base des données d'apprentissage de chemin.

6. Programme de création de données d'apprentissage de chemin, configuré pour amener un ordinateur à servir de dispositif de génération de données d'apprentissage de chemin selon l'une quelconque des revendications 1 à 4.
